(19) Europäisches Patentamt / European Patent Office / Office européen des brevets

(11) **EP 4 286 886 B1**

(12) **EUROPÄISCHE PATENTSCHRIFT**

(45) Veröffentlichungstag und Bekanntmachung des Hinweises auf die Patenterteilung:
**29.05.2024 Patentblatt 2024/22**

(21) Anmeldenummer: **22176421.0**

(22) Anmeldetag: **31.05.2022**

(51) Internationale Patentklassifikation (IPC):
**G01S 7/481** (2006.01) **G01S 7/4863** (2020.01)
**G01S 7/4914** (2020.01) **G01S 17/32** (2020.01)
**G01S 17/36** (2006.01) **G01S 7/499** (2006.01)
**G01S 17/894** (2020.01)

(52) Gemeinsame Patentklassifikation (CPC):
**G01S 7/4816; G01S 7/499; G01S 17/36; G01S 17/894**

(54) **OPTOELEKTRONISCHER SENSOR ZUR ENTFERNUNGSMESSUNG MIT EINER ROUTING-SCHICHT**

OPTOELECTRONIC SENSOR FOR DISTANCE MEASUREMENT WITH A ROUTING LAYER

CAPTEUR OPTOÉLECTRONIQUE DESTINÉ À LA MESURE DE DISTANCE DOTÉ D'UNE COUCHE DE ROUTAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.12.2023 Patentblatt 2023/49**

(73) Patentinhaber: **SICK AG**
**79183 Waldkirch (DE)**

(72) Erfinder:
• **MENZEL, Christoph**
**79211 Denzlingen (DE)**
• **JAHN, Axel**
**79183 Waldkirch (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
**US-A1- 2020 191 962 US-A1- 2020 326 563**

**Beschreibung**

Die vorliegende Erfindung betrifft einen optoelektronischen Sensor zur Entfernungsmessung mit einer Routing-Schicht sowie ein Verfahren zur Entfernungsmessung und ein Verfahren zur Herstellung eines entsprechenden optoelektronischen Sensors.

Bildsensoren, welche beispielsweise für 3D-Kameras verwendet werden, basieren häufig auf sogenannten Time-of-Flight-Verfahren (TOF-Verfahren), welche eine Entfernung zwischen einer Kamera und einem Objekt basierend auf einer gemessenen Zeit ermitteln, die ein Lichtstrahl benötigt, der von einer in der Kamera verbauten Lichtquelle ausgesendet wird, um den Weg zwischen der Kamera und dem Objekt hin- und zurückzulegen.

Bei derartigen TOF-Verfahren ist die erreichbare Tiefenauflösung maßgeblich von der verwendeten Modulationsfrequenz abhängig. Grundsätzlich ist mit einer höheren Modulationsfrequenz auch eine verbesserte Tiefenauflösung erreichbar. Folglich ist die Verwendung von hohen Modulationsfrequenzen wünschenswert. Um die höheren Modulationsfrequenzen verarbeiten zu können, ist der erzielbare Modulationskontrast z.B. beim Mischen des Sende- und Empfangssignals von entscheidender Bedeutung, wobei der Modulationskontrast angibt, wie gut verschiedene Teile des Empfangssignals voneinander unterschieden werden können.

Herkömmliche Bildsensoren umfassen häufig zwei Elektronentöpfe, in denen erzeugte Elektronen "gesammelt" werden. Auf ein Pixel auftreffendes Licht erzeugt Photoelektronen, wobei eine interne, schnell modulierte Spannung dafür sorgt, dass die Photoelektronen in zwei unterschiedliche Richtungen "geleitet" und in einem jeweiligen Elektronentopf "gesammelt" werden. Solch ein Pixel, das zwei Elektronentöpfe umfasst, wird beispielsweise 2-Tap-Pixel oder Lock-In-Pixel genannt. Am Ende einer Messzeit wird gemessen wie viele Elektronen in einem jeweiligen Topf sind. Die Funktion, die die Effizienz des Umleitens der Elektronen in die jeweiligen Töpfe beschreibt, kann man als Modulationsfunktion bezeichnen, die von der Modulationsfrequenz abhängt. Deren Eigenschaft wird effektiv mit dem Modulationskontrast beschrieben. Der Modulationskontrast gibt an, welcher Anteil der Photoelektronen bei elektronischen Mischern - bzw. Photonen bei nichtelektronischen Mischern - tatsächlich in dem (Elektronen)-Topf landen, in dem sie landen sollten. Im Idealfall ist die Modulationsfunktion eine Rechteckfunktion, die zwischen 0 (oder -1) und 1 springt.

Der Modulationskontrast von herkömmlichen Bildsensoren nimmt jedoch bei zunehmenden Frequenzen deutlich ab, so dass keine optimale Tiefenauflösung erreicht wird. Ferner ist bei herkömmlichen Bildsensoren, die beispielsweise Lock-In-Pixel umfassen, die verwendbare Modulationsfrequenz durch die Transportgeschwindigkeit der Ladungsträger im Halbleiter beschränkt.

Es existieren in der Praxis erfolgreiche Versuche, die Bestrahlung eines Bildsensors mit empfangenem Licht periodisch zu blockieren und so eine Demodulation zu ermöglichen, um die Verwendung höherer Modulationsfrequenzen für den entsprechenden Bildsensor zu gestatten. Dabei wird jedoch ein wesentlicher Teil des empfangenen Lichts geblockt und somit nicht genutzt, sodass der Modulationskontrast verschlechtert wird.

US 2020/326563 A1 offenbart ein LIDAR-System zur Distanzmessung, bei dem ein empfangener reflektierter Lichtstrahl mittels linearer und elliptischer Polarisation polarisiert wird und das anschließend resultierende linear polarisierte Licht durch einen polarisierenden Strahlenteiler in eine erste Komponente und in eine zweite Komponente geteilt wird, welche einem jeweiligen Bildsensor zugeführt werden.

Eine der Erfindung zugrundeliegende Aufgabe ist es daher, einen verbesserten optoelektronischen Sensor zur Entfernungsmessung sowie ein Verfahren zur Entfernungsmessung für einen solchen optoelektronischen Sensor und ein Verfahren zur Herstellung eines solchen optoelektronischen Sensors bereitzustellen.

Diese Aufgabe wird durch die Gegenstände der unabhängigen Ansprüche gelöst. Die Erfindung betrifft einen optoelektronischen Sensor zur Entfernungsmessung, umfassend:

> eine Lichtquelle, welche dazu ausgebildet ist, ein Sendesignal in Sendelicht umzuwandeln und das Sendelicht in eine Umgebung auszusenden;
> einen Lichtempfänger, welcher von Objekten in der Umgebung zurückgestrahltes Sendelicht als Empfangslicht empfängt, wobei der Lichtempfänger eine optische Routing-Schicht aufweist,
> wobei der Lichtempfänger einen Bildsensor mit einer Vielzahl von Sensorelementen aufweist, wobei die Sensorelemente ausgebildet sind, Empfangslicht in Empfangssignale umzuwandeln,
> wobei zumindest zwei Sensorelemente Teil einer Sensorelementengruppe sind, wobei die Routing-Schicht ausgebildet ist, das Empfangslicht nacheinander und/oder alternierend den Sensorelementen der Sensorelementengruppe zuzuführen, wobei die Routing-Schicht eine Vielzahl von Partitionen umfasst, welche jeweils einer Sensorelementengruppe zugehörig sind, wobei jede der Vielzahl von Partitionen das Empfangslicht zumindest im Wesentlichen nur den Sensorelementen der einer Partition zugehörigen Sensorelementengruppe zuführt.

Die Erfindung geht von der Erkenntnis aus, dass das Empfangslicht durch die Routing-Schicht zu einem Zeitpunkt, insbesondere jeweils zumindest im Wesentlichen nur, einem Sensorelement einer Sensorelementengruppe zugeführt werden kann, wobei auf diese Weise eine Demodulation des Empfangslichts durchgeführt werden kann. Sind beispielsweise in einer Sensorelementengruppe zwei Sensorelemente vorhanden, kann das Empfangslicht z.B. alternierend den zwei Sensorelementen zugeführt werden, wodurch dann bevorzugt zwei Empfangssignale erzeugt werden können, welche dazu verwendet werden können, um z.B. die Phase (relativ zu dem Sendesignal), die Amplitude und/oder den Intensitätsoffset (ebenfalls relativ zu dem Sendesignal) des Empfangslichts zu ermitteln. Die Lichtlaufzeit zu den Objekten kann auf diese Weise, zumindest indirekt, bestimmt werden.

Insbesondere kann das Empfangslicht innerhalb einer Modulationsperiode, d.h. innerhalb einer Zeitdauer von

$$\frac{1}{Modulationsfrequenz}$$

, den jeweiligen Sensorelementen der Sensorelementengruppe alternierend und/oder nacheinander zugeführt werden, sodass innerhalb einer Modulationsperiode jedes Sensorelement der Sensorelementengruppe zumindest einen Teil des Empfangslichts empfangen und in unterschiedliche Empfangssignale umwandeln kann. Die Modulationsfrequenz ist dabei bevorzugt die Modulationsfrequenz der Sendelichts.

Genauer gesagt sendet die Lichtquelle, beispielsweise ein Laser, das Sendelicht in die Umgebung, in der sich das Objekt befindet. Die von dem Objekt zurückgestrahlten Sendelichtstrahlen werden als Empfangslicht von dem Lichtempfänger, beispielsweise einer Kamera, aufgenommen und weiterverarbeitet. Der Lichtempfänger bündelt das Empfangslicht z.B. mittels einer Empfangslinse und führt das Empfangslicht der optischen Routing-Schicht zu. Die optische Routing-Schicht führt das Empfangslicht, insbesondere gesteuert, nacheinander und/oder alternierend den Sensorelementen der Sensorelementengruppe zu. Das Zuführen von Empfangslicht, d.h. der Vorgang, bei dem einem Sensorelement Empfangslicht zugeführt wird, kann auch als Ansteuern eines Sensorelements bezeichnet werden. Die Sensorelemente der Vielzahl von Sensorelementen der Sensorelementengruppe empfangen somit zumindest einen Teil des Empfangslichts, wobei sich vorzugsweise der empfangene Teil des Empfangslichts eines Sensorelements von dem eines anderen Sensorelements unterscheidet. Ferner können zwei Sensorelemente der Sensorelementengruppe Teile des Empfangslichts jeweils zu unterschiedlichen Zeitpunkten empfangen.

Später ist auch vom "Bestrahlen" von Sensorelementen die Rede. Es versteht sich, dass ein solches Bestrahlen auch die Möglichkeit umfasst, dass - falls kein Empfangslicht eintrifft - auch kein Empfangslicht auf das momentan bestrahlte Sensorelement trifft. Das Bestrahlen kann also als Möglichkeit gesehen werden, dass eintreffendes Empfangslicht dem jeweiligen Sensorelement zugeführt bzw. zugeleitet wird. Insbesondere kann der Begriff "Bestrahlen" gleichbedeutend mit dem Begriff "Ansteuern" verwendet werden.

Die Routing-Schicht kann ferner die Ablenkung des Empfangslichts auf Basis von Eigenschaften des Sendelichts, beispielsweise auf Basis der Modulationsfrequenz des Sendelichts, durchführen. Durch eine Ablenkung bzw. Umleitung des Empfangslichts auf die Sensorelemente anstelle einer Blockierung des Empfangslichts wird das Empfangslicht effektiver ausgenutzt und kein Teil des Empfangslichts verschwendet.

Insbesondere werden eine erhöhte optische Effizienz und ein verbessertes Signal-Rausch-Verhältnis (SNR) erreicht. Dadurch können Messungen schneller durchgeführt werden, wodurch wiederum die Bewegungsunschärfe in einer Aufnahme durch beispielsweise eine Kamera erheblich reduziert und gleichzeitig die Sensoransprechgeschwindigkeit erhöht werden kann.

Durch das sehr schnelle optische Routing bzw. aktive Lenken des Empfangslichts auf die einzelnen Sensorelemente der Sensorelementengruppe wird, z.B. im Vergleich zu Lock-In-Pixeln, ferner die Verarbeitung von Modulationsfrequenzen von beispielsweise 1 GHz, 5 GHz, 10 GHz und/oder mehr als 10 GHz möglich, da die Modulationsfrequenz nicht mehr von der Transportgeschwindigkeit der Ladungsträger im Halbleiter abhängt. Aufgrund der hohen Modulationsfrequenzen kann eine verbesserte Tiefenauflösung erreicht werden. Ferner können durch die Funktionsweise der Routing-Schicht herkömmliche Bildsensoren für einen erfindungsgemäßen optoelektronischen Sensor verwendet werden, sodass keine kostspieligen speziellen Bildsensoren benötigt werden. Darüber hinaus ist es möglich, bestehende Systeme bzw. Sensoren mit einer entsprechenden Routing-Schicht auf einfache Art und Weise nachzurüsten.

Weitere Aspekte der Erfindung sind im Folgenden erläutert.

Eine Sensorelementengruppe verarbeitet insbesondere die einem Bildpunkt zugehörigen Informationen. Insbesondere kann eine Sensorelementengruppe eine beliebige Anzahl an Sensorelementen umfassen und vorzugsweise aber zwei, drei oder vier Sensorelemente. Ein Sensorelement kann beispielsweise ein CMOS-Sensor (z.B. ein 4T-CMOS-Sensor), ein CCD-Sensor oder ein anderer geeigneter Sensor sein.

Das auf die Sensorelemente auftreffende Empfangslicht wird von den Sensorelementen in vorzugsweise elektrische Empfangssignale umgewandelt, welche für die Bestimmung einer TOF des Sendelichts, d.h. einer benötigten Zeit für das Zurücklegen der doppelten Distanz zwischen dem optoelektronischen Sensor und dem Objekt in der Umgebung, verwendet werden kann. Die Empfangssignale können beispielsweise zueinander in Beziehung gesetzt werden, um die TOF des Sendelichts zu bestimmen. Beispielsweise können die Empfangssignale, welche durch zwei Sensorelemente in einem gleichen Zyklus erzeugt wurden, zueinander in Beziehung gesetzt und vorzugsweise voneinander subtrahiert werden. Die Differenz zweier Empfangssignale kann in einem mathematischen Verfahren dazu verwendet werden, um die TOF zu bestimmen. Die Empfangssignale können aber auch auf andere Art und Weise zueinander in Beziehung gesetzt und/oder miteinander verglichen werden, um die TOF des Sendelichts zu bestimmen. Insbesondere wird die TOF des Sendelichts auf indirekte Weise ermittelt. Hierfür werden die auf die separaten Sensorelemente auftreffenden unterschiedlichen Teile des Empfangslichts, in unterschiedliche Empfangssignale umgewandelt, auf deren Basis die TOF des Sendelichts auf indirekte Weise bestimmt werden kann. Weitere Ausführungsformen der Erfindung sind der Beschreibung, den Unteransprüchen sowie den Zeichnungen zu entnehmen.

Gemäß einer ersten Ausführungsform umfasst der Bildsensor ein zweidimensionales Detektorarray mit gleichartigen Sensorelementen und/oder Sensorelementengruppen, d.h. die Sensorelemente einer Sensorelementengruppe und/oder die Sensorelementengruppen sind gleich bzw. weisen den gleichen technischen Aufbau auf. Beispielsweise kann das zweidimensionale Detektorarray einen herkömmlichen RGB-Bildsensor ohne eine Farbfilterschicht umfassen. Ferner kann der Bildsensor beispielsweise CCD-Array-Sensoren, CMOS-Sensoren, oder jede andere geeignete Art von Sensoren umfassen. Ein entsprechender Bildsensor lässt sich somit auf einfache Weise umsetzen, da herkömmliche und nicht spezielle Bildsensoren bzw. Detektorarrays verwendet werden können.

Gemäß der Erfindung umfasst die Routing-Schicht eine Vielzahl von Partitionen, welche jeweils einer Sensorelementengruppe zugehörig sind, wobei jede der Vielzahl von Partitionen das Empfangslicht zumindest im Wesentlichen nur den Sensorelementen der einer Partition zugehörigen Sensorelementengruppe zuführt. Eine Partition ist insbesondere ein abgegrenzter und/oder selbstständiger Teil der Routing-Schicht. Die Partition kann in Draufsicht beispielsweise quadratisch oder rechteckig ausgebildet sein. Die Größe der Partition kann zumindest im Wesentlichen der Größe der der Partition zugehörigen Sensorelementengruppe sein. Eine Partition kann dabei eine eigenständige Funktionseinheit sein, welche die Funktionen der Routing-Schicht unabhängig von den anderen Partitionen der Routing-Schicht ausführen kann. Eine Partition kann die Funktion bereitstellen, das Empfangslicht zu bündeln und/oder den Sensorelementen der zugehörigen Sensorelementengruppe zuzuführen. Die Partition der Routing-Schicht kann aufgrund ihrer geringen Größe beim Zuführen von Empfangslicht ein schnelles Umschalten zwischen den einzelnen Sensorelementen gestatten. Die Verarbeitung besonders hoher Modulationsfrequenzen wird damit ermöglicht. Zudem kann bei einem Ausfall und/oder einer Fehlfunktion einer Partition der Betrieb der noch funktionsfähigen Partitionen der Routing-Schicht ungehindert fortgeführt werden. Die Anzahl der Partitionen der Routing-Schicht ist bevorzugt abhängig von und insbesondere gleich der Anzahl an Sensorelementengruppen des Bildsensors.

Gemäß einer weiteren Ausführungsform ist die Routing-Schicht mechanisch mit dem Bildsensor gekoppelt oder an dem Bildsensor befestigt. Die Routing-Schicht kann beispielsweise direkt auf den Bildsensor aufgebracht sein oder in geringem Abstand, z.B. maximal 5 mm, 3 mm oder 2 mm, zu dem Bildsensor befestigt sein. Durch den geringen Abstand kann das Empfangslicht nur einzelnen Sensorelementen zugeführt werden, ohne das größere Anteile des Empfangslichts auf momentan nicht zu bestrahlende Sensorelemente treffen. Die Routing-Schicht kann insbesondere elektrische Steuerleitungen umfassen, die die Steuerung der Routing-Schicht ermöglichen.

Gemäß einer weiteren Ausführungsform umfasst die Routing-Schicht eine erste und eine zweite Schicht, wobei die zweite Schicht dazu ausgebildet ist, das Empfangslicht nacheinander und/oder alternierend den Sensorelementen der Sensorelementengruppe zuzuführen. Die erste und zweite Schicht der Routing-Schicht können unterschiedliche Funktionen aufweisen, wobei die erste Schicht das Empfangslicht aufnehmen kann und vorzugsweise gebündelt auf die zweite Schicht weiterleitet, welche das Empfangslicht z.B. in einer vordefinierten Reihenfolge nacheinander den Sensorelementen der Sensorelementengruppe zuführt. Die erste und zweite Schicht der Routing-Schicht können ferner als eine Baugruppe realisiert werden. Beispielsweise werden die beiden Schichten im Herstellungsprozess als eine Baugruppe realisiert. Alternativ ist es auch möglich, dass die Routing-Schicht nur eine Schicht umfasst, welche die gesamten Funktionen der ersten und zweiten Schicht ausführt.

Gemäß einer weiteren Ausführungsform umfasst die erste und/oder die zweite Schicht eine Vielzahl von Linsen. Beispielsweise umfasst jede Partition der Routing-Schicht eine Linse, insbesondere nur eine Linse. Die Linsen können beispielsweise das Empfangslicht bündeln und/oder gezielt ablenken. Insbesondere können die Linsen eine konkave, konvexe und/oder eine andere geeignete Form aufweisen, wobei die Linsen vorzugsweise konkav sind.

Gemäß einer weiteren Ausführungsform ist die erste Schicht dazu ausgebildet, das Empfangslicht auf die zweite Schicht zu lenken, wobei die zweite Schicht elektrisch steuerbar ist, um das Empfangslicht nacheinander und/oder alternierend den Sensorelementen der Sensorelementengruppe zuzuführen. Die erste Schicht der Routing-Schicht kann das Empfangslicht, vorzugsweise mittels der erwähnten Linsen, lenken und/oder formen und das Empfangslicht der zweiten Schicht zuführen. Die zweite Schicht kann elektrisch z.B. mittels einer elektrischen Steuerung gesteuert werden. Die elektrische Steuerung kann ausgebildet sein, eine Ablenkungsrichtung des Empfangslichts festzulegen und insbesondere das Empfangslicht in zwei unterschiedliche Richtungen alternierend abzulenken. Ferner kann die elektrische Steuerung ausgebildet sein, insbesondere bei mehr als zwei Sensorelementen pro Sensorelementengruppe eine Reihenfolge festzulegen, in der die Sensorelemente der Sensorelementengruppe mit dem Empfangslicht bestrahlt werden. Die zweite Schicht kann die Ablenkung des Empfangslichts auf die einzelnen Sensorelemente beispielsweise mittels Mikrospiegeln und/oder durch Prismen, bei welchen der Brechungsindex und damit die Ausbreitungsrichtung des Empfangslichts elektrooptisch verändert wird und/oder andere geeignete Mittel bewirken. Insbesondere kann der Brechungsindex mit einer Vielzahl von elektrooptischen Effekten verändert und/oder eingestellt werden. Beispielsweise können Phase-Change-Materials, die z.B. zwischen kristallin und amorph wechseln, TCOs (transparent conductive oxides), die durch Anlegen einer Spannung und/oder Änderung der Ladungsträgerdichte z.B. eine Plasmafrequenz und damit den Brechungsindex verändern, und/oder organische elektrooptische Materialien wie DAST verwendet werden. Allgemein ist im Bereich der photonisch integrierten Optik eine Vielzahl von Materialien, Ansätzen und elektrooptischen Effekten bekannt, die zum schnellen Schalten von Licht benutzt werden können. Die zweite Schicht kann die vorstehend genannten Mittel umfassen.

Die Bestrahlung der einzelnen Sensorelemente einer Sensorelementengruppe kann mittels der elektrischen Steuerung somit angepasst werden und insbesondere an Eigenschaften des Empfangslichts und/oder Sendelichts angepasst werden. Beispielsweise kann eine Zeitdauer der Bestrahlung eines Sensorelements, eine Reihenfolge der Bestrahlung der Sensorelemente der Sensorelementengruppe an die Modulationsfrequenz des Sende- und/oder Empfangslichts, an die Anzahl der Sensorelemente pro Sensorelementengruppe und/oder an den Sensorelementtyp angepasst werden.

Bevorzugt kann die Routing-Schicht oder die erste Schicht oder die zweite Schicht keine beweglichen Teile umfassen. Die Lenkung des Empfangslichts erfolgt dann z.B. nur über elektrooptische Effekte und dergleichen.

Ferner kann die elektrische Steuerung ausgebildet sein, die Ablenkung des Empfangslichts so zu steuern, dass zu jedem Zeitpunkt der Bestrahlung zumindest ein Teil des Empfangslichts auf zumindest ein Sensorelement der Sensorelementengruppe trifft. Insbesondere wird zumindest 50% oder zumindest 80% des Empfangslichts, welches z.B. auf eine Partition der Routing-Schicht trifft, nur einem Sensorelement zugeführt. Bevorzugt ist die Routing-Schicht ausgebildet, kein Empfangslicht zu blockieren (bis auf z.B. nicht vermeidbare Reflexionen und dergleichen). Die Routing-Schicht ist somit dauerhaft lichtdurchlässig für das Empfangslicht ausgebildet, wodurch letztlich mehr Empfangslicht auf den Bildsensor gelangt.

Vorzugsweise steuert die elektrische Steuerung die Ablenkung des Empfangslichts derart, dass ein Übergang zwischen der Bestrahlung eines Sensorelements der Sensorelementengruppe und eines anderen Sensorelements der Sensorelementengruppe, d.h. ein Zeitraum, in dem zwei Sensorelemente der Sensorelementengruppe gleichzeitig bestrahlt werden, von kurzer Zeitdauer und insbesondere kürzer als z.B. 10 ns oder 0,1 ns ist. Hierdurch wird erreicht, dass ein durch ein Sensorelement der Sensorelementengruppe umgewandeltes Empfangssignal sich im Wesentlichen von einem durch ein anderes Sensorelement der Sensorelementengruppe umgewandeltes Empfangssignal unterscheidet und/oder im Wesentlichen unterschiedliche Teile des Empfangslichts von den Sensorelementen der Sensorelementengruppe erfasst werden. Nichtsdestotrotz ist es auch möglich, dass zwei oder mehr Sensorelemente der Sensorelementengruppe für eine grö-ßere als die oben erwähnte Zeitdauer gleichzeitig bestrahlt werden.

Ferner kann die elektrische Steuerung so ausgebildet sein, dass das Empfangslicht den Sensorelementen der Sensorelementengruppe zyklisch zugeführt wird, d.h. in einer vordefinierten und/oder wiederkehrenden Reihenfolge. Jedes Sensorelement der Sensorelementengruppe wird innerhalb einer Modulationsperiode einer Vielzahl von Modulationsperioden somit vorzugsweise zumindest einmal und insbesondere genau einmal bestrahlt. Eine einmalige Bestrahlung eines Sensorelements innerhalb der Modulationsperiode liegt vor, wenn das Sensorelement innerhalb der Modulationsperiode für eine bestimmte Zeitdauer ohne Unterbrechung bestrahlt wird und keine weitere Bestrahlung innerhalb derselben Modulationsperiode erfolgt.

Gemäß einer weiteren Ausführungsform ist die erste Schicht ausgebildet, die Polarisation des Empfangslichts wahlweise (d.h. beispielsweise auf ein Steuersignal der elektrischen Steuerung hin) zu ändern, und ist die zweite Schicht ausgebildet, abhängig von der Polarisation des Empfangslichts das Empfangslicht unterschiedlichen Sensorelementen der Sensorelementengruppe zuzuführen. Beispielsweise kann das ausgesendete Sendelicht und somit das von dem Objekt in der Umgebung entsprechend zurückgestrahlte Empfangslicht eine vorbestimmte Polarisation aufweisen. Die erste Schicht der Routing-Schicht kann das auf die erste Schicht treffende Empfangslicht in seiner Polarisation verändern. Beispielsweise kann die erste Schicht für vorbestimmte Zeitdauern linkszirkular-polarisiertes Empfangslicht zu rechtszirkular-polarisiertem Empfangslicht umwandeln oder umgekehrt. Zur Veränderung der Polarisation kann die erste Schicht eine optisch aktive Schicht und/oder jedes andere dafür geeignete Mittel umfassen. Die Polarisation des Empfangslichts kann ferner eine lineare Polarisation, eine zirkulare Polarisation oder jede andere Art von Polarisation sein oder umfassen.

Die zweite Schicht kann ferner dazu ausgebildet sein, das Empfangslicht abhängig von der Polarisation des Empfangslichts abzulenken. Insbesondere kann die zweite Schicht polarisationsabhängige Linsen, Metaoberflächen und/oder Polarisationsfilter umfassen. Metaoberflächen, die die so genannte Pancharatnam-Berry Phase kontrollieren und somit eine polarisationsabhängige Strahlformung und -ablenkung eines Lichtstrahls ermöglichen, sind aus der Literatur bekannt (z.B. "Multifunctional Metamirror: Polarization Splitting and Focusing", ACS Photonics 2018 5 (5), DOI: 10.1021/acsphotonics.7b01091 oder "Reflective metalens with sub-diffraction-limited and multifunctional focusing", Sci Rep 7, 12632 (2017). DOI: 10.1038/s41598-017-13004-z). In der ersten Schicht kann beispielsweise in jeder Modulationsperiode eine zeitweilige Veränderung der Polarisation des Empfangslichts vorgenommen werden. Durch die polarisationsabhängige Ablenkung des Empfangslichts in der zweiten Schicht kann das Empfangslicht somit nacheinander und/oder alternierend verschiedenen Sensorelementen zugeführt werden.

Grundsätzlich kann die zweite Schicht ausgebildet sein, das Empfangslicht abhängig von dessen Polarisation, Amplitude und/oder Wellenlänge abzulenken. Die erste Schicht kann dabei eine entsprechende Veränderung des Empfangslichts vornehmen.

Die elektrische Steuerung kann zudem ausgebildet sein, zumindest einen Teil der Funktionen oder alle Funktionen des optoelektronischen Sensors zu steuern. Insbesondere kann die elektrische Steuerung die Entfernung zu einem Objekt bestimmen und die Entfernung als Entfernungssignal ausgeben. Das Entfernungssignal kann z.B. auch eine Tiefenkarte enthalten, wobei z.B. für jede Sensorelementengruppe ein separater Entfernungswert bestimmt und (von der elektrischen Steuerung) in die Tiefenkarte eingetragen wird.

Gemäß einer weiteren Ausführungsform sind die Sensorelemente der Sensorelementengruppe in einer Reihe oder in zwei oder mehr Reihen angeordnet, wobei ein jedes Sensorelement der Sensorelementengruppe direkt oder zumindest über ein Sensorelement mit einem anderen Sensorelement der Sensorelementengruppe in physischem Kontakt steht.

Beispielsweise sind die Sensorelemente der Sensorelementengruppe nebeneinander entlang einer geraden Linie angeordnet. Eine Reihe kann dabei vertikal, horizontal oder in eine andere Richtung ausgerichtet sein. Ferner können die Sensorelemente der Sensorelementengruppe auch in zwei oder mehr direkt nebeneinander liegenden Reihen angeordnet sein. Beispielsweise können bei vier Sensorelementen pro Sensorelementengruppe die Sensorelemente in einem 2x2-Raster angeordnet sein. Bei einer solchen Anordnung kann die Routing-Schicht die Sensorelemente z.B. in Draufsicht im Uhrzeigersinn oder gegen den Uhrzeigersinn nacheinander bestrahlen.

Gemäß einer weiteren Ausführungsform ist der Bildsensor ausgebildet, ein Auslesen der Sensorelemente, und insbesondere von durch die Sensorelemente akkumulierten Ladungsmengen, nach einer vorbestimmten Anzahl an Bestrahlungszyklen und/oder für die Sensorelemente der Sensorelementengruppe separat durchzuführen. Mit anderen Worten wird erst nach einer vorbestimmten Anzahl an Modulationsperioden die durch ein Sensorelement akkumulierte Ladung erfasst bzw. ausgewertet. Ein Bestrahlungszyklus kann einer Modulationsperiode entsprechen. Aus diesem Grund wird nachfolgend auch von Modulationsperioden gesprochen.

Mit dem Auslesen bzw. dem Auswerten der akkumulierten Ladung wird das Empfangssignal erzeugt. Die akkumulierte Ladungsmenge hängt bevorzugt mit der von einem Sensorelement empfangenen Lichtmenge des Empfangslichts zusammen. Das Auslesen oder Auswerten nach einer größeren Anzahl an Modulationsperioden hat den Vorteil, dass größere Ladungsmengen akkumuliert werden können, welche leichter ausgelesen werden können und ein verbessertes SNR des Empfangssignals erreicht wird. Die vorbestimmte Anzahl an Bestrahlungszyklen bzw. Modulationsperioden ist vorzugsweise so gewählt, dass sich eine Messwerterfassungszeitdauer ergibt, welche deutlich größer und insbesondere um den Faktor 1.000, 10.000 oder 100.000 größer als die Dauer einer Modulationsperiode

$$t_{Modulationsperiode} = \frac{1}{Modulationsfrequenz}$$

ist. Bevorzugt ist der optoelektronische Sensor also ausgebildet, das Empfangssignal erst nach zumindest 1.000, 10.000 oder 100.000 Bestrahlungszyklen zu erzeugen. Insbesondere ist die vorbestimmte Anzahl an Bestrahlungszyklen/Modulationsperioden so gewählt, dass das entsprechende SNR des Empfangssignals einen vorgegebenen Schwellenwert überschreitet.

Gemäß einer weiteren Ausführungsform ist der Bildsensor ausgebildet, das Auslesen der durch die Sensorelemente erzeugten Ladungsmengen für die Sensorelemente der Sensorelementengruppe zumindest im Wesentlichen gleichzeitig durchzuführen, beispielsweise durch paralleles Auslesen mehrerer oder aller Sensorelemente des Bildsensors und/oder mehrere oder aller Sensorelementengruppen des Bildsensors. Der Bildsensor kann zu diesem Zweck ausgebildet sein, einen sogenannten "global shutter" auszuführen. Alternativ ist auch ein serielles Auslesen in Form eines "rolling shutters" möglich.

Gemäß einer weiteren Ausführungsform ist der Sensor ausgebildet, eine Entfernung zu Objekten in der Umgebung basierend zumindest auf vier oder zumindest auf acht Empfangssignalen, welche von zwei Sensorelementen derselben Sensorelementengruppe erzeugt werden, zu bestimmen. Die Entfernung kann insbesondere mittels eines Vier-Phasen-Verfahrens bestimmt werden. Von den zwei Sensorelementen können beispielsweise in einem ersten Messvorgang zwei Empfangssignale $E_{1,1}$, $E_{1,2}$ erzeugt werden. Ein jeweiliges Empfangssignal gibt dabei die Intensität oder Menge des von dem jeweiligen Sensorelement während eines Messvorgangs bzw. einer vorbestimmten Anzahl von Modulationsperioden empfangenen Empfangslichts an. Insbesondere wird ein Sensorelement während eines Messvorgangs für die Zeitdauer $t = \frac{1}{2} \cdot t_{Modulationsperiode} \cdot n_{Mod}$ angesteuert, d.h. ein Sensorelement ist während eines Messvorgangs für diese Zeitdauer empfangsbereit, wobei $n_{Mod}$ einer vorbestimmten Anzahl an Modulationsperioden entspricht. Der Zeitpunkt und/oder die Zeitdauer der Bestrahlung eines Sensorelement wird insbesondere durch den Zeitpunkt der Änderung der Ablenkungsrichtung bestimmt, welcher durch die Modulationsfunktion bestimmt wird. Die Modulationsfunktion ist vorzugsweise eine Rechteckfunktion, welche vorzugsweise nach jeweils 180° bzw. $\pi$ einen Flankenwechsel aufweist. Abhängig von der Steilheit des Flankenwechsels kann ferner festgelegt werden, für welche Zeitdauer zwei Sensorelemente gleichzeitig mit Empfangslicht bestrahlt werden. In einem nachfolgenden zweiten, dritten und vierten Messvorgang können ferner die Empfangssignale $E_{2,1}$, $E_{2,2}$, $E_{3,1}$, $E_{3,2}$, $E_{4,1}$, $E_{4,2}$ erzeugt werden, wobei die Modulationsfunktion für den zweiten, dritten und vierten Messvorgang um jeweils 90° bzw. $\frac{\pi}{2}$ versetzt wird. Die Phasenverschiebung $\Phi_{TOF}$ des Empfangslichts zum Sendelicht für die jeweilige Sensorelementengruppe kann anschließend mittels Kreuzkorrelation wie folgt ermittelt werden, wobei $E_1$, $E_2$, $E_3$ und $E_4$ die Differenz der in einem entsprechenden Messvorgang erzeugten Empfangssignale der zwei Sensorelemente, d.h. $E_1 = E_{1,1} - E_{1,2}$, $E_2 = E_{2,1} - E_{2,2}$, $E_3 = E_{3,1} - E_{3,2}$ und $E_4 = E_{4,1} - E_{4,2}$, darstellen:

$$\Phi_{TOF} = tan^{-1}\left(\frac{E_4 - E_2}{E_1 - E_3}\right)$$

Aus der Phasenverschiebung $\Phi_{TOF}$ und gegebenenfalls aus der Amplitude und/oder dem Intensitätsoffset zwischen Sendelicht und Empfangslicht kann dann auf bekannte Weise die Entfernung zu dem Objekt (bzw. zu einem Punkt des Objekts) bestimmt werden.

Grundsätzlich ist es auch möglich die Phasenverschiebung mittels einer 3-Phasen-Messung zu ermitteln, wobei in diesem Fall drei Sensorelemente verwendet werden können.

In einer anderen Ausführungsform der Erfindung können auch vier Sensorelemente für die Bestimmung der Phasenverschiebung verwendet werden. Gemäß dieser weiteren Ausführungsform ist der Sensor ausgebildet, eine Entfernung zu Objekten in der Umgebung basierend zumindest auf vier Empfangssignalen von vier Sensorelementen derselben Sensorelementengruppe zu bestimmten. Die vier Sensorelemente können dabei nacheinander und insbesondere zumindest im Wesentlichen nur einzeln mit Empfangslicht bestrahlt werden. Die Entfernung kann also mittels eines Vier-Phasen-Verfahrens bestimmt werden. Von den vier Sensorelementen können vier Empfangssignalen $E_1$, $E_2$, $E_3$ und $E_4$ erzeugt werden. Ein jeweiliges Empfangssignal gibt dabei die Intensität oder Menge des von dem jeweiligen Sensorelement während einer vorbestimmten Anzahl von Modulationsperioden empfangenen modulierten Empfangslicht an. Die Phasenverschiebung $\Phi_{TOF}$ des Empfangslichts zum Sendelicht für die jeweilige Sensorelementengruppe kann mittels Kreuzkorrelation wie folgt ermittelt werden:

$$\Phi_{TOF} = tan^{-1}\left(\frac{E_4 - E_2}{E_1 - E_3}\right)$$

Aus der Phasenverschiebung $\Phi_{TOF}$ kann dann auf bekannte Weise die Entfernung zu dem Objekt (bzw. zu einem Punkt des Objekts) bestimmt werden.

In einer anderen Ausführungsform der Erfindung können ebenfalls vier Sensorelemente für die Bestimmung der Phasenverschiebung verwendet werden. Beispielsweise wird bei vier Sensorelementen pro Sensorelementengruppe, während eines Bestrahlungszyklus in einer ersten Modulationsperiode ein erstes und zweites Sensorelement der Sensorelementengruppe mit Empfangslicht bestrahlt, während in einer zweiten Modulationsperiode ein drittes und viertes Sensorelement mit Empfangslicht bestrahlt wird. Insbesondere werden das erste und dritte bzw. das zweite und vierte Sensorelement mit einem im Wesentlichen identischen Teil des Empfangslichts bestrahlt, sodass auch die entsprechenden von den Sensorelementen erzeugten Empfangssignale im Wesentlichen gleich sind. Für das erste und dritte bzw. das zweite und vierte Sensorelement kann dann ein sogenanntes "binning" erfolgen, d.h. die Signale der jeweiligen Sensorelemente werden kombiniert. Wie oben ausgeführt können die Sensorelemente für $n_{Mod}$ Modulationsperioden und einer entsprechenden Anzahl an Bestrahlungszyklen mit Empfangslicht bestrahlt werden bis entsprechende Empfangssignale erzeugt werden. Das dritte und vierte Sensorelement sind als redundante Sensorelemente zu verstehen, mit denen beispielsweise herstellungsbedingte Abweichungen der Sensorelemente ausgeglichen werden können. Alternativ können auch das erste und dritte Sensorelement während eines Bestrahlungszyklus in einer ersten Bestrahlungsphase gleichzeitig mit Empfangslicht bestrahlt werden und das zweite und vierte Sensorelement können in einer zweiten Bestrahlungsphase gleichzeitig mit Empfangslicht bestrahlt werden. Die Bestimmung der Phasenverschiebung - im Fall von vier Sensorelementen pro Sensorelementengruppe - kann wie in dem Fall mit zwei Sensorelementen erfolgen, wobei beispielsweise das Empfangssignal $E_{1,1}$ während eines ersten Messvorgangs auf Basis der von dem ersten und dritten Sensorelement erzeugten Empfangssignale, beispielsweise auf Basis eines Mittelwerts der von dem zweiten und vierten Sensorelement erzeugten Empfangssignale, bestimmt wird und das Empfangssignal $E_{1,2}$ auf Basis der von dem zweiten und vierten Sensorelement erzeugten Empfangssignale, beispielsweise auf Basis eines Mittelwerts der von dem zweiten und vierten Sensorelement erzeugten Empfangssignale, bestimmt wird. Die Empfangssignale $E_{2,1}$,

$E_{2,2}$, $E_{3,1}$, $E_{3,2}$, $E_{4,1}$ und $E_{4,2}$ können entsprechend in einem zweiten, dritten und vierten Messvorgang bestimmt werden.

Es ist auch möglich, dass die vier Sensorelemente während eines Bestrahlungszyklus nacheinander zumindest im Wesentlichen unterschiedliche Empfangssignale empfangen, d.h. während einer Modulationsperiode jedes Sensorelement zumindest einmal bestrahlt wird, sodass jedes Sensorelement ein unterschiedliches Empfangssignal erzeugt. Insbesondere kann sich in einem solchen Fall auch die Dauer der Bestrahlung der einzelnen Sensorelemente einer Sensorelementengruppe während eines Bestrahlungszyklus voneinander unterscheiden.

Nach dem Erzeugen eines Empfangssignals bzw. nach einem Messvorgang können die Sensorelemente zurückgesetzt werden, um einen neuen Messvorgang zu ermöglichen, welcher unbeeinflusst von einer vorherigen von dem Sensorelement durchgeführten Signalumwandlung ist.

Gemäß einer weiteren Ausführungsform ist die Lichtquelle ausgebildet, das Sendelicht amplitudenmoduliert auszusenden. Beispielsweise kann mittels eines Spannungsoszillators ein oszillierendes Spannungssignal (z.B. das Sendesignal), welches die Modulationsfrequenz umfasst, der Lichtquelle zugeführt werden, um das amplitudenmodulierte Sendelicht zu erzeugen. Insbesondere kann die Modulationsfrequenz des amplitudenmodulierten Sendelichts eine Frequenz von mehr als 1 GHz, 5 GHz, 10 GHz und/oder 50 GHz umfassen.

Die Erfindung betrifft ferner ein Verfahren für einen optoelektronischen Sensor zur Entfernungsmessung, das umfasst, dass:

ein Sendesignal in Sendelicht umgewandelt wird und das Sendelicht in eine Umgebung ausgesendet wird; von Objekten in der Umgebung zurückgestrahltes Sendelicht als Empfangslicht von einem Lichtempfänger, der eine Routing-Schicht und einen Bildsensor mit einer Vielzahl von Sensorelementen aufweist, empfangen wird und das Empfangslicht von den Sensorelementen in ein Empfangssignal umgewandelt wird, wobei zumindest zwei Sensorelemente Teil einer Sensorelementengruppe sind und die optische Routing-Schicht das Empfangslicht nacheinander und/oder alternierend den Sensorelementen der Sensorelementengruppe zuführt, wobei die Routing-Schicht eine Vielzahl von Partitionen umfasst, welche jeweils einer Sensorelementengruppe zugehörig sind, wobei jede der Vielzahl von Partitionen das Empfangslicht zumindest im Wesentlichen nur den Sensorelementen der einer Partition zugehörigen Sensorelementengruppe zuführt.

Gemäß einer weiteren Ausführungsform wird jedes Sensorelement für eine gleiche Zeitdauer angesteuert/bestrahlt und ist insbesondere die Zeitdauer der Bestrahlung eines Sensorelements (bei zwei Sensorelementen pro Sensorelementengruppe) wie folgt bestimmt:

$$T_{Bestrahlung} = \frac{t_{Modulationsperiode}}{2}$$

wobei $t_{Modulationsperiode}$ eine Zeitdauer einer Modulationsperiode des Sendesignals und/oder Empfangssignals ist. Für vier Sensorelemente pro Sensorelementengruppe könnte der Divisor in der obigen Gleichung auch "4" sein. Allgemein kann für "n" Sensorelemente pro Sensorelementengruppe der Divisor in der obigen Gleichung auch "n" sein.

Die Erfindung betrifft ferner ein Verfahren zur Herstellung eines optoelektronischen Sensors zur Entfernungsmessung nach einem der vorstehenden Ausführungsformen, welches umfasst, dass: der Bildsensor und die Routing-Schicht im gleichen Herstellungsprozess als Lichtempfänger hergestellt werden. Insbesondere können der Bildsensor und die Routing-Schicht im gleichen Herstellungsprozess mittels aufeinanderfolgender Lithographieprozesse erzeugt werden.

Zudem kann die Routing-Schicht im Herstellungsprozess so positioniert werden, dass das Empfangslicht zuerst auf die Routing-Schicht trifft und von dieser an den Bildsensor weitergeleitet oder durchgeleitet wird. Bei herkömmlichen Bildsensoren, wie beispielsweise RGB-Bildsensoren, wird vor dem eigentlichen Bildsensor eine Farbfilterschicht verbaut, welche Farben des Empfangslichts filtert. Bei einem Herstellungsprozess solcher Bildsensoren kann statt einer solchen Farbfilterschicht eine Routing-Schicht verbaut werden. Folglich kann der optoelektronische Sensor ohne einen kostspieligen speziellen Herstellungsprozess hergestellt werden.

Für das Verfahren für den optoelektronischen Sensor und das Herstellungsverfahren gelten die Ausführungen zum optoelektronischen Sensor entsprechend, dies gilt insbesondere bezüglich Vorteilen und Ausführungsformen. Zudem versteht es sich, dass sämtliche hierin genannten Merkmale und Ausführungsformen miteinander kombiniert werden können, sofern nicht etwas Gegenteiliges angegeben ist.

Nachfolgend wird die Erfindung rein beispielhaft unter Bezugnahme auf die Zeichnungen dargestellt. Es zeigen jeweils in schematischer Ansicht:

Fig. 1          einen optoelektronischen Sensor zur Entfernungsmessung,

Fig. 2          eine Ausführungsform eines Lichtempfängers für einen optoelektronischen Sensor zur Entfernungsmessung,

Fig. 3          eine weitere Ausführungsform eines Lichtempfängers für einen optoelektronischen Sensor zur Entfernungsmessung, und

Fig. 4A, 4B     einen Ausschnitt eines Bildsensors.

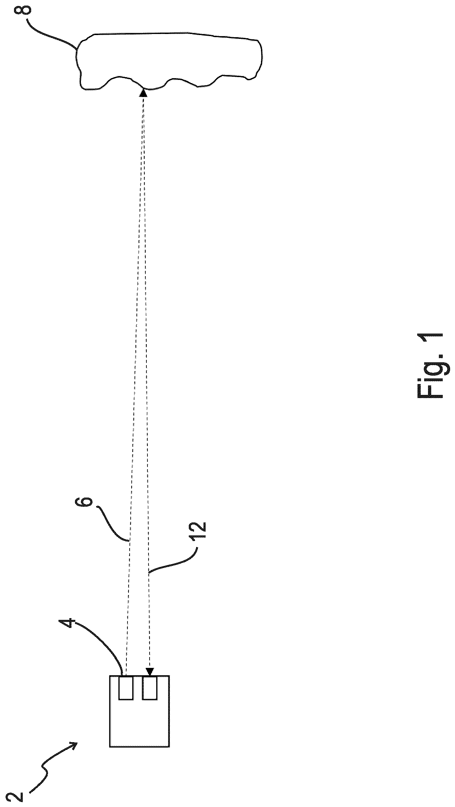

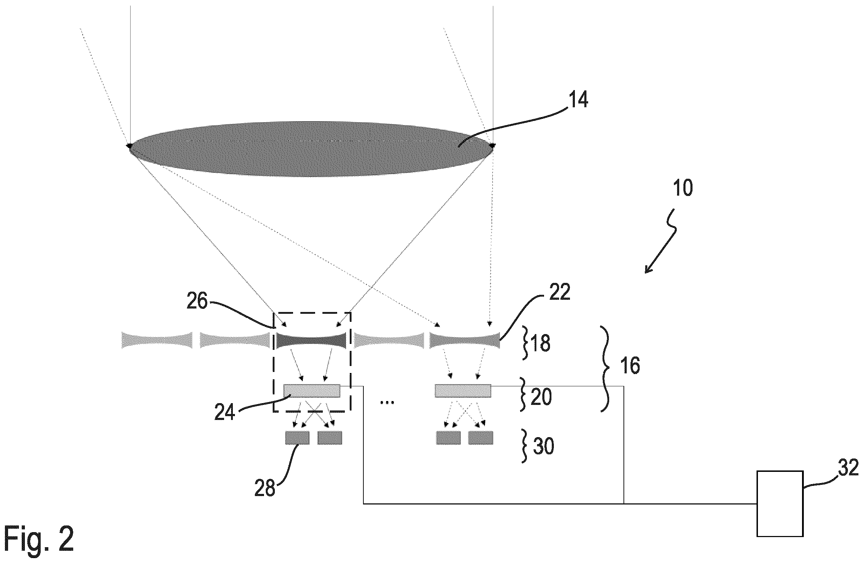

Fig. 1 zeigt einen optoelektronischen Sensor 2 zur Entfernungsmessung. Der optoelektronische Sensor 2 umfasst eine Lichtquelle 4, welche ein elektrisches Sendesignal in Sendelicht 6 umwandelt und das Sendelicht 6 in eine Umgebung aussendet, in der sich ein Objekt 8 befindet. Von dem Objekt 8 zurückgestrahltes Sendelicht 6 wird von einem Lichtempfänger 10 des optoelektronischen Sensors 2 als Empfangslicht 12 empfangen, wobei das Empfangslicht 12 von dem Lichtempfänger 10 in ein elektrisches Empfangssignal umgewandelt wird. Der Lichtempfänger 10 ist beispielsweise in Fig. 2 gezeigt.

Wie in Fig. 2 dargestellt, wird das Empfangslicht 12 von zwei Sensorelementen 28 einer Sensorelementengruppe 30 des Lichtempfängers 10 in elektrische Empfangssignale umgewandelt, wobei jedes Sensorelement 28 der Sensorelementengruppe 30 ein unterschiedliches Empfangssignal erzeugt.

Das Sendelicht 6 und damit auch das Empfangslicht 12 sind vorzugsweise amplitudenmoduliert, wobei das amplitudenmodulierte Sendelicht 6 eine Modulationsfrequenz f von mehr als 1 GHz, 5 GHz, 10 GHz und/oder 50 GHz aufweisen kann.

Fig. 2 zeigt den Lichtempfänger 10 des optoelektronischen Sensors 2 zur Entfernungsmessung. Der Lichtempfänger 10 umfasst eine Empfangslinse 14, welche das modulierte Empfangslicht 12 empfängt und an eine Routing-Schicht 16 weiterleitet. Die Routing-Schicht 16 umfasst eine erste Schicht 18 und eine zweite Schicht 20. Die erste Schicht 18 umfasst eine Vielzahl von konkaven Linsen 22 und insbesondere Mikrolinsen, welche das durch die Empfangslinse 14 weitergeleitete Empfangslicht 12 aufnehmen und auf die zweite Schicht 20 lenken. Die zweite Schicht umfasst eine Vielzahl von Abschnitten 24, die jeweils einer Linse 22 der ersten Schicht 18 zugehörig sind. Eine Linse 22 der ersten Schicht 18 und ein zugehöriger Abschnitt 24 der zweiten Schicht 20 bilden zusammen eine Partition 26 der Routing-Schicht 16. Ein Abschnitt 24 (d.h. ein Teil der Partition 26) der zweiten Schicht 20 empfängt das Empfangslicht 12 von einer zugehörigen Linse 22 der ersten Schicht 18 und lenkt das Empfangslicht 12 gesteuert nacheinander und alternierend auf die Sensorelemente 28 einer Sensorelementengruppe 30. Die Lenkung des Empfangslichts 12 kann z.B. durch elektrooptische Mechanismen erfolgen. Die zweite Schicht 20 ist dabei mit einer elektrischen Steuerung 32 verbunden, so dass das Empfangslicht 12 den Sensorelementen 28 der Sensorelementengruppe 30 elektrisch steuerbar zugeführt werden kann.

Das modulierte Empfangslicht 12 wird wiederholt und nacheinander zwei Sensorelementen 28 zugeführt, die nach einer vorbestimmten Anzahl von Wiederholungen (d.h. Bestrahlungszyklen) bzw. nach einem ersten Messvorgang jeweils Empfangssignale $E_{1,1}$ und $E_{1,2}$ aus dem Empfangslicht erzeugen. Nach drei weiteren darauffolgenden Messvorgängen ergeben sich ferner die entsprechenden Empfangssignale $E_{2,1}$, $E_{2,2}$, $E_{3,1}$, $E_{3,2}$, $E_{4,1}$, $E_{4,2}$, welche unterschiedlich voneinander sind. Basierend auf den Empfangssignalen werden Differenzsignale $E_1$, $E_2$, $E_3$ und $E_4$ für die jeweiligen ersten bis vierten Messvorgänge gebildet, wobei $E_1 = E_{1,1} - E_{1,2}$, $E_2 = E_{2,1} - E_{2,2}$, $E_3 = E_{3,1} - E_{3,2}$ und $E_4 = E_{4,1} - E_{4,2}$ ist.

Die Phasenverschiebung $\Phi_{TOF}$ des Empfangslichts 12 zum Sendelicht 6 für die Sensorelementengruppe 30 der zwei Sensorelemente 28 kann dann mittels der folgenden Formel ermittelt werden:

$$\Phi_{TOF} = tan^{-1}\left(\frac{E_4 - E_2}{E_1 - E_3}\right)$$

Basierend auf der Phasenverschiebung $\Phi_{TOF}$ zwischen Empfangs- und Sendesignal kann die Distanz zwischen dem optoelektronischen Sensor 2 und dem Objekt 8 berechnet werden.

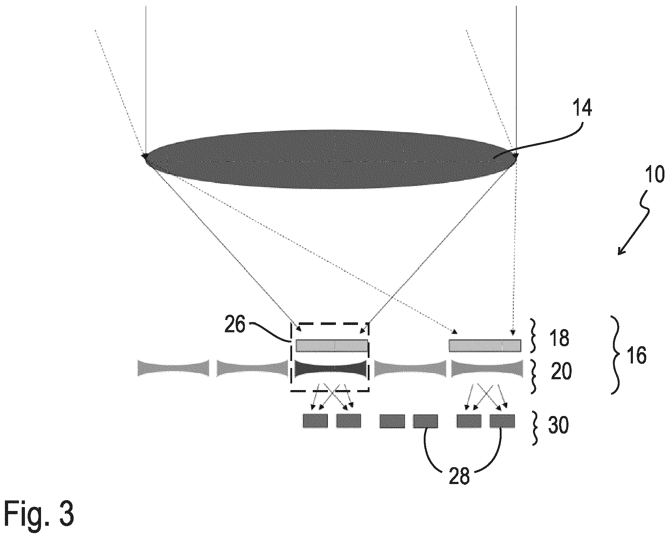

Fig. 3 zeigt eine weitere Ausführungsform eines Lichtempfängers 10 für einen optoelektronischen Sensor 2 zur Entfernungsmessung, bei der eine Polarisation des Sendelichts 6 und/oder des Empfangslichts 12 ausgenutzt wird, um das Empfangslicht 12 wahlweise auf die Sensorelemente 28 zu lenken. Der Aufbau des Lichtempfängers 12 in Fig. 3 entspricht im Wesentlichen dem Aufbau des Lichtempfängers 12 in Fig. 2, unterscheidet sich aber im Aufbau der optischen Routing-Schicht 16.

Die in Fig. 3 eingesetzte optische Routing-Schicht 16 umfasst ebenfalls eine erste Schicht 18 und eine zweite Schicht 20. Die erste Schicht 18 erzeugt und/oder ändert die Polarisation des Empfangslichts 12 und leitet das Empfangslicht 12 weiter an die zweite Schicht 20. Beispielsweise kann die erste Schicht 18 das Empfangslicht 12 so manipulieren, dass das an die zweite Schicht 20 weitergeleitete Empfangslicht 18 eine zwischen linkszirkularer und rechtszirkularer Polarisation wechselnde Polarisation aufweist. Die zweite Schicht 20, welche eine Vielzahl von polarisationsabhängigen Linsen umfasst, kann das Empfangslicht 12 abhängig von der Polarisation des Empfangslichts 12 den zwei Sensorelementen 28 der Sensorelementengruppe 30 zuführen. Es ist auch denkbar, dass der Bildsensor drei, vier oder mehr als vier Sensorelemente umfasst und die Polarisation durch steuerbare Halbwellenplatten (HWP) und Viertelwellenplatten (QWP) beliebig ausgewählt und/oder gewechselt wird (wie beispielsweise bei fiber polarization controllern bekannt) und dann die zweite Schicht, beispielsweise ein Metasurface, eine Ablenkung auf die unterschiedlichen Pixel passiv umsetzt.

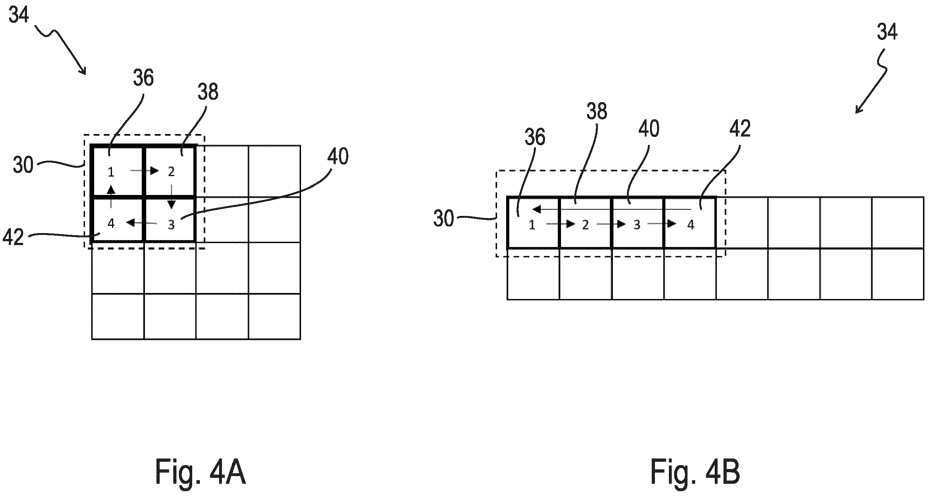

Fig. 4A zeigt einen Ausschnitt eines Bildsensors 34. In dem Ausschnitt sind vier Sensorelementengruppen 30 mit jeweils vier Sensorelementen 28 pro Sensorelementengruppe 30 dargestellt. Jede Sensorelementengruppe 30 umfasst zwei Reihen mit jeweils zwei Sensorelementen 28 pro Reihe. Die Routing-Schicht 16 führt in einer ersten Bestrahlungsphase dem ersten Sensorelement 36 das Empfangslicht 12 für eine Zeitdauer

$$t_{Bestrahlung} = \frac{1}{2} \cdot t_{Modulationsperiode}$$ oder $t_{Bestrahlung} = \frac{1}{4} \cdot t_{Modulationsperiode}$ zu. In einer darauffolgenden zweiten Bestrahlungsphase führt die Routing-Schicht 16 dem zweiten Sensorelement 38 das Empfangslicht 12 für die Zeitdauer $t_{Bestrahlung}$ zu. In einer darauffolgenden dritten Bestrahlungsphase führt die Routing-Schicht dem dritten Sensorelement 40 das Empfangslicht 12 für die Zeitdauer $t_{Bestrahlung}$ zu. In einer darauffolgenden vierten Bestrahlungsphase führt die Routing-Schicht dem vierten Sensorelement 42 das Empfangslicht 12 für die Zeitdauer $t_{Bestrahlung}$ zu. Die Ablenkung des Empfangslichts 12 auf die unterschiedlichen Sensorelemente 28 erfolgt dabei wie in Fig. 4 gezeigt "im Uhrzeigersinn". Die Ablenkung des Empfangslichts 12 auf die unterschiedlichen Sensorelemente 28 kann aber auch "gegen den Uhrzeigersinn" erfolgen. Insbesondere kann die Ablenkung des Empfangslichts 12 auf die unterschiedlichen Sensorelemente 28 in jeder beliebigen Art und Weise erfolgen.

In Fig. 4B ist ein weiterer Ausschnitt eines Bildsensors 34 gezeigt. In dieser Ausführungsform sind die Sensorelemente 28 der Sensorelementengruppe 30 nebeneinander in einer Reihe angeordnet. Die Ablenkung des Empfangslichts 12 durch die Routing-Schicht 16 erfolgt dabei von links nach rechts beginnend bei dem ersten Sensorelement 36 bis zum vierten Sensorelement 42. Wenn das Empfangslicht 12 auf das vierte Sensorelement 42 abgelenkt wurde und ein Bestrahlungszyklus, d.h. zwei Modulationsperioden bzw. eine Modulationsperiode, beendet wird, so wird das Empfangslicht 12 so abgelenkt, dass es in einer darauffolgenden Modulationsperiode bzw. in einem darauffolgenden Bestrahlungszyklus erneut auf das erste Sensorelement 36 trifft. Die Ablenkung des Empfangslichts 12 kann ferner auch von links nach rechts oder in einer anderen geeigneten Art und Weise erfolgen.

Für $$t_{Bestrahlung} = \frac{1}{4} \cdot t_{Modulationsperiode}$$ $t_{Bestrahlung}$ kann die Entfernung mittels des oben erläuterten Vier-Phasen-Verfahrens ermittelt werden.

Bezugszeichenliste

2   Optoelektronischer Sensor
4   Lichtquelle
6   Sendelicht
8   Objekt
10   Lichtempfänger
12   Empfangslicht
14   Empfangslinse
16   Routing-Schicht
18   erste Schicht
20   zweite Schicht
22   Linsen
24   Abschnitte
26   Partitionen
28   Sensorelemente
30   Sensorelementengruppe
32   elektrische Steuerung
34   Bildsensor
36   erstes Sensorelement

38 zweites Sensorelement
40 drittes Sensorelement
42 viertes Sensorelement

**Patentansprüche**

1. Optoelektronischer Sensor (2) zur Entfernungsmessung, umfassend:

eine Lichtquelle (4), welche dazu ausgebildet ist, ein Sendesignal in Sendelicht (6) umzuwandeln und das Sendelicht (6) in eine Umgebung auszusenden;
einen Lichtempfänger (10), welcher von Objekten (8) in der Umgebung zurückgestrahltes Sendelicht (6) als Empfangslicht (12) empfängt, wobei der Lichtempfänger (10) eine optische Routing-Schicht (16) aufweist,
wobei der Lichtempfänger (10) einen Bildsensor mit einer Vielzahl von Sensorelementen (28) aufweist, wobei die Sensorelemente (28) ausgebildet sind, Empfangslicht (12) in Empfangssignale umzuwandeln,
wobei zumindest zwei Sensorelemente (28) Teil einer Sensorelementengruppe (30) sind,
wobei die Routing-Schicht (16) ausgebildet ist, das Empfangslicht (12) nacheinander und/oder alternierend den Sensorelementen (28) der Sensorelementengruppe (30) zuzuführen,
wobei die Routing-Schicht (16) eine Vielzahl von Partitionen (26) umfasst,
welche jeweils einer Sensorelementengruppe (30) zugehörig sind, wobei jede der Vielzahl von Partitionen (26) das Empfangslicht (36) zumindest im
Wesentlichen nur den Sensorelementen (28) der einer Partition (26) zugehörigen Sensorelementengruppe (30) zuführt.

2. Optoelektronischer Sensor (2) nach Anspruch 1,
wobei der Bildsensor ein zweidimensionales Detektorarray mit gleichartigen Sensorelementen (28) und/oder Sensorelementengruppen (30) umfasst.

3. Optoelektronischer Sensor (2) nach einem der vorstehenden Ansprüche,
wobei die Routing-Schicht (16) mechanisch mit dem Bildsensor gekoppelt oder an dem Bildsensor befestigt ist.

4. Optoelektronischer Sensor (2) nach einem der vorstehenden Ansprüche, wobei die Routing-Schicht (16) eine erste (18) und eine zweite Schicht (20) umfasst, wobei die zweite Schicht (20) dazu ausgebildet ist, das Empfangslicht (12) nacheinander und/oder alternierend den Sensorelementen (28) der Sensorelementengruppe (30) zuzuführen.

5. Optoelektronischer Sensor (2) nach Anspruch 4,
wobei die erste (18) und/oder die zweite Schicht (20) eine Vielzahl von Linsen (22) umfasst.

6. Optoelektronischer Sensor (2) nach einem der Ansprüche 4 oder 5, wobei die erste Schicht (18) dazu ausgebildet ist, das Empfangslicht (12) auf die zweite Schicht (20) zu lenken, wobei die zweite Schicht (20) elektrisch steuerbar ist, um das Empfangslicht (12) nacheinander und/oder alternierend den Sensorelementen (28) der Sensorelementengruppe (30) zuzuführen.

7. Optoelektronischer Sensor (2) nach einem der Ansprüche 4 oder 5, wobei die erste Schicht (18) dazu ausgebildet ist, die Polarisation des Empfangslichts (12) wahlweise zu ändern, und die zweite Schicht (20) dazu ausgebildet ist, abhängig von der Polarisation des Empfangslichts (12) das Empfangslicht (12) unterschiedlichen Sensorelementen (28) der Sensorelementengruppe (30) zuzuführen.

8. Optoelektronischer Sensor (2) nach einem der vorstehenden Ansprüche, wobei der Bildsensor ausgebildet ist, ein Auslesen von durch die Sensorelemente (28) akkumulierten Ladungsmengen nach einer vorbestimmten Anzahl an Bestrahlungszyklen und/oder für die Sensorelemente (28) der Sensorelementengruppe (30) separat durchzuführen, wobei der optoelektronische Sensor (2) bevorzugt ausgebildet ist, das Empfangssignal erst nach zumindest 1.000, 10.000 oder 100.000 Bestrahlungszyklen zu erzeugen.

9. Optoelektronischer Sensor (2) nach Anspruch 8,
wobei der Bildsensor ausgebildet ist, das Auslesen der durch die Sensorelemente (28) akkumulierten Ladungsmengen für die Sensorelemente (28) der Sensorelementengruppe (30) im Wesentlichen gleichzeitig durchzuführen wird.

10. Optoelektronischer Sensor (2) nach einem der vorstehenden Ansprüche, wobei der Sensor (2) ausgebildet ist, eine Entfernung zu den Objekten (8) in der Umgebung basierend zumindest auf acht Empfangssignalen $E_{1,1}$, $E_{1,2}$, $E_{2,1}$, $E_{2,2}$, $E_{3,1}$, $E_{3,2}$, $E_{4,1}$ und $E_{4,2}$, welche von zwei Sensorelementen (28) derselben Sensorelementengruppe (30) erzeugt werden, zu bestimmen, wobei eine Phasenverschiebung $\Phi_{TOF}$ des Empfangslichts (12) zum Sendelicht (6) für die jeweilige Sensorelementengruppe (30) basierend auf der Formel

$$\Phi_{TOF} = tan^{-1}\left(\frac{(E_{4,1} - E_{4,2}) - (E_{2,1} - E_{2,2})}{(E_{1,1} - E_{1,2}) - (E_{3,1} - E_{3,2})}\right)$$

ermittelt wird, wobei $E_{1,1}$ und $E_{1,2}$ die Empfangssignale sind, welche von den zwei Sensorelementen nach einem ersten Messvorgang erzeugt werden, $E_{2,1}$ und $E_{2,2}$ die Empfangssignale sind, welche von den zwei Sensorelemente nach einem zweiten Messvorgang erzeugt werden, $E_{3,1}$ und $E_{3,2}$ die Empfangssignale sind, welche von den zwei Sensorelemente nach einem dritten Messvorgang erzeugt werden und $E_{4,1}$ und $E_{4,2}$ die Empfangssignale sind, welche von den zwei Sensorelemente nach einem vierten Messvorgang erzeugt werden, wobei ein jeweiliges Empfangssignal die Intensität oder Menge des von dem jeweiligen Sensorelement (28) während eines Messvorgangs empfangenen Empfangslichts (12) angibt.

11. Optoelektronischer Sensor (2) nach einem der vorstehenden Ansprüche 1 bis 9,
wobei der Sensor (2) ausgebildet ist, eine Entfernung zu den Objekten (8) in der Umgebung basierend zumindest auf vier Empfangssignalen von vier Sensorelementen (28) derselben Sensorelementengruppe (30) zu bestimmten, wobei eine Phasenverschiebung $\Phi_{TOF}$ des Empfangslichts (12) zum Sendelicht (6) für die jeweilige Sensorelementengruppe (30) basierend auf der Formel

$$\Phi_{TOF} = tan^{-1}\left(\frac{E_4 - E_2}{E_1 - E_3}\right)$$

ermittelt wird, wobei $E_1$, $E_2$, $E_3$ und $E_4$ die Empfangssignale der Sensorelemente (28) sind, wobei ein jeweiliges Empfangssignal die Intensität oder Menge des von dem jeweiligen Sensorelement (28) während einer vorbestimmten Anzahl von Modulationsperioden empfangenen modulierten Empfangslichts (12) angibt.

12. Optoelektronischer Sensor (2) nach einem der vorstehenden Ansprüche, wobei die Lichtquelle (4) ausgebildet ist, das Sendelicht (6) amplitudenmoduliert auszusenden, wobei die Lichtquelle (4) ausgebildet ist, für die Amplitudenmodulation bevorzugt eine Frequenz von mehr als 1 GHz, 5 GHz, 10 GHz oder 50 GHz zu verwenden.

13. Verfahren für einen optoelektronischen Sensor (2) zur Entfernungsmessung, das umfasst, dass:

ein Sendesignal in Sendelicht (6) umgewandelt wird und das Sendelicht (6) in eine Umgebung ausgesendet wird; von Objekten (8) in der Umgebung zurückgestrahltes Sendelicht (6) als Empfangslicht (12) von einem Lichtempfänger (10), der eine Routing-Schicht (16) und einen Bildsensor mit einer Vielzahl von Sensorelementen (28) aufweist, empfangen wird und das Empfangslicht (12) von den Sensorelementen (28) in Empfangssignale umgewandelt wird, wobei zumindest zwei Sensorelemente (28) Teil einer Sensorelementengruppe (30) sind und die optische Routing-Schicht (16) das Empfangslicht (12) nacheinander und/oder alternierend den Sensorelementen (28) der Sensorelementengruppe (30) zuführt, wobei die Routing-Schicht (16) eine Vielzahl von Partitionen (26) umfasst, welche jeweils einer Sensorelementengruppe (30) zugehörig sind, wobei jede der Vielzahl von Partitionen (26) das Empfangslicht (36) zumindest im Wesentlichen nur den Sensorelementen (28) der einer Partition (26) zugehörigen Sensorelementengruppe (30) zuführt.

14. Verfahren zur Herstellung eines optoelektronischen Sensors (2) zur Entfernungsmessung nach einem der Ansprüche 1 bis 12, welches umfasst, dass:
der Bildsensor und die Routing-Schicht (16) im gleichen Herstellungsprozess als Lichtempfänger (10) hergestellt werden.

**Claims**

1. An optoelectronic sensor (2) for distance measurement, comprising:

a light source (4) which is configured to convert a transmission signal into transmission light (6) and to transmit the transmission light (6) into an environment;

a light receiver (10) which receives transmission light (6) reflected by objects (8) in the environment as reception light (12), wherein the light receiver (10) has an optical routing layer (16),

wherein the light receiver (10) has an image sensor comprising a plurality of sensor elements (28), wherein the sensor elements (28) are configured to convert reception light (12) into reception signals,

wherein at least two sensor elements (28) are part of a sensor element group (30),

wherein the routing layer (16) is configured to supply the reception light (12) successively and/or alternately to the sensor elements (28) of the sensor element group (30),

wherein the routing layer (16) comprises a plurality of partitions (26) which are each associated with a sensor element group (30), wherein each of the plurality of partitions (26) supplies the reception light (36) at least substantially only to the sensor elements (28) of the sensor element group (30) associated with a partition (26).

2. An optoelectronic sensor (2) according to claim 1,
   wherein the image sensor comprises a two-dimensional detector array having sensor elements (28) and/or sensor element groups (30) of the same kind.

3. An optoelectronic sensor (2) according to one of the preceding claims,
   wherein the routing layer (16) is mechanically coupled to the image sensor or fastened to the image sensor.

4. An optoelectronic sensor (2) according to any one of the preceding claims, wherein the routing layer (16) comprises a first (18) and a second layer (20), wherein the second layer (20) is configured to supply the reception light (12) successively and/or alternately to the sensor elements (28) of the sensor element group (30).

5. An optoelectronic sensor (2) according to claim 4,
   wherein the first (18) and/or the second layer (20) comprises/comprise a plurality of lenses (22).

6. An optoelectronic sensor (2) according to one of the claims 4 or 5,
   wherein the first layer (18) is configured to direct the reception light (12) to the second layer (20), wherein the second layer (20) can be electrically controlled to supply the reception light (12) successively and/or alternately to the sensor elements (28) of the sensor element group (30).

7. An optoelectronic sensor (2) according to one of the claims 4 or 5,
   wherein the first layer (18) is configured to selectively change the polarization of the reception light (12) and the second layer (20) is configured to supply the reception light (12) to different sensor elements (28) of the sensor element group (30) depending on the polarization of the reception light (12).

8. An optoelectronic sensor (2) according to any one of the preceding claims, wherein the image sensor is configured to perform a readout of charge quantities accumulated by the sensor elements (28) after a predetermined number of irradiation cycles and/or separately for the sensor elements (28) of the sensor element group (30), wherein the optoelectronic sensor (2) is preferably configured to generate the reception signal only after at least 1,000, 10,000 or 100,000 irradiation cycles.

9. An optoelectronic sensor (2) according to claim 8,
   wherein the image sensor is configured to perform the readout of the charge quantities accumulated by the sensor elements (28) substantially at the same time for the sensor elements (28) of the sensor element group (30).

10. An optoelectronic sensor (2) according to any one of the preceding claims, wherein the sensor (2) is configured to determine a distance from the objects (8) in the environment based on at least eight reception signals $E_{1,1}$, $E_{1,2}$, $E_{2,1}$, $E_{2,2}$, $E_{3,1}$, $E_{3,2}$, $E_{4,1}$ and $E_{4,2}$ which are generated by two sensor elements (28) of the same sensor element group (30), wherein a phase shift $\Phi_{TOF}$ of the reception light (12) with respect to the transmission light (6) is determined for the respective sensor element group (30) based on the formula

$$\Phi_{TOF} = tan^{-1}\left(\frac{(E_{4,1} - E_{4,2}) - (E_{2,1} - E_{2,2})}{(E_{1,1} - E_{1,2}) - (E_{3,1} - E_{3,2})}\right),$$

where $E_{1,1}$ and $E_{1,2}$ are the reception signals that are generated by the two sensor elements after a first measurement process, $E_{2,1}$ and $E_{2,2}$ are the reception signals that are generated by the two sensor elements after a second measurement process, $E_{3,1}$ and $E_{3,2}$ are the reception signals that are generated by the two sensor elements after a third measurement process, and $E_{4,1}$ and $E_{4,2}$ are the reception signals that are generated by the two sensor elements after a fourth measurement process, wherein a respective reception signal indicates the intensity or amount of the reception light (12) received by the respective sensor element (28) during a measurement process.

11. An optoelectronic sensor (2) according to any one of the preceding claims 1 to 9,
wherein the sensor (2) is configured to determine a distance from the objects (8) in the environment based on at least four reception signals from four sensor elements (28) of the same sensor element group (30), wherein a phase shift $\Phi_{TOF}$ of the reception light (12) with respect to the transmission light (6) is determined for the respective sensor element group (30) based on the formula

$$\Phi_{TOF} = tan^{-1}\left(\frac{E_4 - E_2}{E_1 - E_3}\right),$$

where $E_1$, $E_2$, $E_3$ and $E_4$ are the reception signals of the sensor elements (28), wherein a respective reception signal indicates the intensity or amount of the modulated reception light (12) received by the respective sensor element (28) during a predetermined number of modulation periods.

12. An optoelectronic sensor (2) according to any one of the preceding claims, wherein the light source (4) is configured to transmit the transmission light (6) in an amplitude-modulated manner, wherein the light source (4) is configured to preferably use a frequency of more than 1 GHz, 5 GHz, 10 GHz or 50 GHz for the amplitude modulation.

13. A method for an optoelectronic sensor (2) for distance measurement, said method comprising:

a transmission signal being converted into transmission light (6) and the transmission light (6) being transmitted into an environment;
transmission light (6) reflected by objects (8) in the environment being received as reception light (12) by a light receiver (10) which has a routing layer (16) and an image sensor comprising a plurality of sensor elements (28), and the reception light (12) being converted into reception signals by the sensor elements (28), wherein at least two sensor elements (28) are part of a sensor element group (30) and the optical routing layer (16) supplies the reception light (12) successively and/or alternately to the sensor elements (28) of the sensor element group (30), wherein the routing layer (16) comprises a plurality of partitions (26) which are each associated with a sensor element group (30), wherein each of the plurality of partitions (26) supplies the reception light (36) at least substantially only to the sensor elements (28) of the sensor element group (30) associated with a partition (26).

14. A method for manufacturing an optoelectronic sensor (2) for distance measurement according to any one of the claims 1 to 12, said method comprising:
the image sensor and the routing layer (16) being manufactured as light receivers (10) in the same manufacturing process.

## Revendications

1. Capteur optoélectronique (2) destiné à la mesure de distances, comprenant :

une source de lumière (4) conçue pour convertir un signal d'émission en lumière d'émission (6) et pour émettre la lumière d'émission (6) dans un environnement ;
un récepteur de lumière (10) qui reçoit en tant que lumière de réception (12) la lumière d'émission (6) renvoyée par des objets (8) dans l'environnement,
le récepteur de lumière (10) comprenant une couche de routage optique (16),
dans lequel
le récepteur de lumière (10) présente un capteur d'image ayant une pluralité d'éléments capteurs (28), les éléments capteurs (28) étant conçus pour convertir la lumière de réception (12) en signaux de réception,
au moins deux éléments capteurs (28) font partie d'un groupe d'éléments capteurs (30),
la couche de routage (16) est conçue pour amener la lumière de réception (12) successivement et/ou alternativement aux éléments capteurs (28) du groupe d'éléments capteurs (30),
la couche de routage (16) comprend une pluralité de partitions (26) associées chacune à un groupe d'éléments capteurs (30), chacune de la pluralité de partitions (26) amenant la lumière de réception (36) au moins sensiblement uniquement aux éléments capteurs (28) du groupe d'éléments capteurs (30) associé à une partition (26).

2. Capteur optoélectronique (2) selon la revendication 1,
dans lequel le capteur d'image comprend un réseau de détection bidimensionnel comprenant des éléments capteurs (28) et/ou des groupes d'éléments capteurs (30) de même type.

3. Capteur optoélectronique (2) selon l'une des revendications précédentes, dans lequel la couche de routage (16) est couplée mécaniquement au capteur d'image ou est fixée au capteur d'image.

4. Capteur optoélectronique (2) selon l'une des revendications précédentes, dans lequel la couche de routage (16) comprend une première (18) et une deuxième couche (20), la deuxième couche (20) étant conçue pour amener la lumière de réception (12) successivement et/ou alternativement aux éléments capteurs (28) du groupe d'éléments capteurs (30).

5. Capteur optoélectronique (2) selon la revendication 4,
dans lequel la première (18) et/ou la deuxième couche (20) comprend une pluralité de lentilles (22).

6. Capteur optoélectronique (2) selon l'une des revendications 4 ou 5, dans lequel la première couche (18) est conçue pour diriger la lumière de réception (12) sur la deuxième couche (20), la deuxième couche (20) étant commandable électriquement pour amener la lumière de réception (12) successivement et/ou alternativement aux éléments capteurs (28) du groupe d'éléments capteurs (30).

7. Capteur optoélectronique (2) selon l'une des revendications 4 ou 5, dans lequel la première couche (18) est conçue pour modifier sélectivement la polarisation de la lumière de réception (12), et la deuxième couche (20) est conçue pour amener la lumière de réception (12) à différents éléments capteurs (28) du groupe d'éléments capteurs (30) en fonction de la polarisation de la lumière de réception (12).

8. Capteur optoélectronique (2) selon l'une des revendications précédentes, dans lequel le capteur d'image est conçu pour effectuer une lecture de quantités de charge, accumulées par les éléments capteurs (28), après un nombre prédéterminé de cycles d'irradiation et/ou séparément pour les éléments capteurs (28) du groupe d'éléments capteurs (30), le capteur optoélectronique (2) étant de préférence conçu pour générer le signal de réception seulement après au moins 1 000, 10 000 ou 100 000 cycles d'irradiation.

9. Capteur optoélectronique (2) selon la revendication 8,
dans lequel le capteur d'image est conçu pour effectuer la lecture des quantités de charge, accumulées par les éléments capteurs (28), de manière sensiblement simultanée pour les éléments capteurs (28) du groupe d'éléments capteurs (30).

10. Capteur optoélectronique (2) selon l'une des revendications précédentes, dans lequel le capteur (2) est conçu pour déterminer une distance par rapport aux objets (8) dans l'environnement en se basant sur au moins huit signaux de réception $E_{1,1}$, $E_{1,2}$, $E_{2,1}$, $E_{2,2}$, $E_{3,1}$, $E_{3,2}$, $E_{4,1}$ et $E_{4,2}$ générés par deux éléments capteurs (28) du même groupe d'éléments capteurs (30), en déterminant un déphasage $\Phi_{TOF}$ de la lumière de réception (12) par rapport à la lumière d'émission (6) pour le groupe d'éléments capteurs respectif (30) à l'aide de la formule

$$\Phi_{TOF} = tan^{-1}\left(\frac{(E_{4,1} - E_{4,2}) - (E_{2,1} - E_{2,2})}{(E_{1,1} - E_{1,2}) - (E_{3,1} - E_{3,2})}\right)$$

où $E_{1,1}$ et $E_{1,2}$ sont les signaux de réception générés par les deux éléments capteurs après une première opération de mesure, $E_{2,1}$ et $E_{2,2}$ sont les signaux de réception générés par les deux éléments capteurs après une deuxième opération de mesure, $E_{3,1}$ et $E_{3,2}$ sont les signaux de réception générés par les deux éléments capteurs après une troisième opération de mesure, et $E_{4,1}$ et $E_{4,2}$ sont les signaux de réception générés par les deux éléments capteurs après une quatrième opération de mesure, un signal de réception respectif indiquant l'intensité ou la quantité de la lumière de réception (12) reçue par l'élément capteur respectif (28) pendant une opération de mesure.

**11.** Capteur optoélectronique (2) selon l'une des revendications précédentes 1 à 9, dans lequel le capteur (2) est conçu pour déterminer une distance par rapport aux objets (8) dans l'environnement en se basant sur au moins quatre signaux de réception de quatre éléments capteurs (28) du même groupe d'éléments capteurs (30), en déterminant un déphasage $\Phi_{TOF}$ de la lumière de réception (12) par rapport à la lumière d'émission (6) pour le groupe d'éléments capteurs respectif (30) à l'aide de la formule

$$\Phi_{TOF} = tan^{-1}\left(\frac{E_4 - E_2}{E_1 - E_3}\right)$$

où $E_1$, $E_2$, $E_3$ et $E_4$ sont les signaux de réception des éléments capteurs (28), un signal de réception respectif indiquant l'intensité ou la quantité de la lumière de réception (12) modulée reçue par l'élément capteur respectif (28) pendant un nombre prédéterminé de périodes de modulation.

**12.** Capteur optoélectronique (2) selon l'une des revendications précédentes, dans lequel la source de lumière (4) est conçue pour émettre la lumière d'émission (6) en modulation d'amplitude, la source de lumière (4) étant conçue pour utiliser de préférence une fréquence supérieure à 1 GHz, 5 GHz, 10 GHz ou 50 GHz pour la modulation d'amplitude.

**13.** Procédé pour un capteur optoélectronique (2) destiné à la mesure de distances, qui comprend que :

un signal d'émission est converti en lumière d'émission (6), et la lumière d'émission (6) est émise dans un environnement ;
la lumière d'émission (6), renvoyée par des objets (8) dans l'environnement,
est reçue en tant que lumière de réception (12) par un récepteur de lumière (10) qui présente une couche de routage (16) et un capteur d'image ayant une pluralité d'éléments capteurs (28), et la lumière de réception (12) est convertie en signaux de réception par les éléments capteurs (28),
dans lequel
au moins deux éléments capteurs (28) font partie d'un groupe d'éléments capteurs (30), et la couche de routage optique (16) amène la lumière de réception (12) successivement et/ou alternativement aux éléments capteurs (28) du groupe d'éléments capteurs (30),
la couche de routage (16) comprend une pluralité de partitions (26) qui sont associées chacune à un groupe d'éléments capteurs (30), chacune de la pluralité de partitions (26) amenant la lumière de réception (36) au moins sensiblement uniquement aux éléments capteurs (28) du groupe d'éléments capteurs (30) associé à une partition (26).

**14.** Procédé de fabrication d'un capteur optoélectronique (2) destiné à la mesure de distances selon l'une des revendications 1 à 12, qui comprend que :
le capteur d'image et la couche de routage (16) sont fabriqués en tant que récepteur de lumière (10) au cours du même processus de fabrication.

Fig. 1

Fig. 2

Fig. 3

Fig. 4A

Fig. 4B

EP 4 286 886 B1

**IN DER BESCHREIBUNG AUFGEFÜHRTE DOKUMENTE**

**In der Beschreibung aufgeführte Patentdokumente**

- US 2020326563 A1